# EUROPEAN PATENT APPLICATION

(11) **EP 3 587 533 A1**
(43) Date of publication of application: **01.01.2020**
(21) Application number: 18179236.7
(22) Date of filing: 22.06.2018
(51) Int. Cl.: C09K 8/588, C08F 220/54, C08F 226/06

(54) **SELF-PROTECTING POLYMERS FOR ENHANCED OIL RECOVERY**

(71) Applicant: BASF SE, 67056 Ludwigshafen am Rhein (DE)
(72) Inventor: Langlozt, Bjoern, 67056 Ludwigshafen (DE); Zimmermann, Tobias Joachim, 67056 Ludwigshafen (DE); Hillesheim, Nina Susanne, 8966 Oberwil-Lieli (CH); Reichenbach-Klinke, Roland, 83308 Trostberg (DE); Dr. Brand, Fabien, 4057 Basel (CH); Schoening, Kai-Uwe, 4057 Basel (CH)
(74) Representative: Büchel, Edwin

(57) **Abstract**

The present invention relates to a process for producing mineral oil from underground mineral oil deposits, in which an aqueous formulation comprising at least one thickening, water-soluble copolymer (P) is injected into a mineral oil deposit through at least one injection well and crude oil is withdrawn from the deposit through at least one production well, said water-soluble copolymer (P) comprising monomer units resulting from at least 40 to 80 % by weight of at least one uncharged, monoethylenically unsaturated, hydrophilic monomers (A), 10 to 55 % by weight of at least one ionic, monoethylenically unsaturated, hydrophilic monomer (B), 0 to 5% by weight of at least one monoethylenically unsaturated macromonomer (C) at least comprising - as well as the monoethylenically unsaturated group - a hydrophilic group and a hydrophobic group, and 0.01 to 2 % by weight of at least one stabilizer monomer (D) represented by the general formula (II) 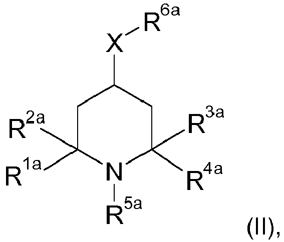 wherein R^{1a} to R^{6a} and X have the meaning as indicated in the description and claims. The invention further relates to the water-soluble copolymer (P), its use and an aqueous formulation comprising said polymer (P).

## Description

The present invention relates to a process for producing mineral oil from underground mineral oil deposits, in which an aqueous formulation comprising at least one thickening, water-soluble copolymer (P) is injected into a mineral oil deposit through at least one injection well and crude oil is withdrawn from the deposit through at least one production well, said water-soluble copolymer (P) comprising monomer units resulting from at least 40 to 80 % by weight of at least one uncharged, monoethylenically unsaturated, hydrophilic monomers (A), 10 to 55 % by weight of at least one ionic, monoethylenically unsaturated, hydrophilic monomer (B), 0 to 5% by weight of at least one monoethylenically unsaturated macromonomer (C) at least comprising - as well as the monoethylenically unsaturated group - a hydrophilic group and a hydrophobic group, and 0.01 to 2 % by weight of at least one stabilizer monomer (D) represented by the general formula (II) 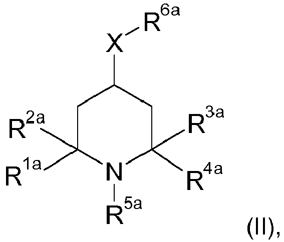 wherein R^{1a} to R^{6a} and X have the meaning as indicated in the description and claims. The invention further relates to the water-soluble copolymer (P), its use and an aqueous formulation comprising said polymer (P).

It is known that thickening water-soluble polymers can be used for tertiary mineral oil production, especially in what is called polymer flooding. The use of high molecular weight acrylamide polymers is widespread, these typically being poly(meth)acrylamide or poly(meth)acrylamide copolymers. For example, it is possible to use copolymers of (meth)acrylamide, acrylic acid and/or sulfo-functional monomers such as AMPS (2-acrylamido-2-methylpropane-1-sulfonic acid, H₂C=CH-CO-NH-C(CH₃)₂-CH₂-SO₃H). Additionally known is the use of what are called hydrophobically associating copolymers in the mineral oil production sector, especially for tertiary mineral oil production (enhanced oil recovery, EOR). These hydrophobically associating copolymers are described, for example, in WO 2010/133527. Details of the use of hydrophobically associating copolymers for tertiary mineral oil production are described, for example, in the review article by Taylor, K.C. and Nasr-El-Din, H.A. in J. Petr. Sci. Eng. 1998, 19, 265-280.

Polymer flooding involves injecting dilute aqueous polymer solutions through an injection well into a mineral oil-bearing underground formation. These polymer solutions flow into the formations in the direction of the production well. In the course of this, they force the mineral oil or natural gas and any formation water in the direction of the production well, such that a mixture of mineral oil or natural gas and formation water is produced through the production well. Processes for polymer flooding are described, for example, in WO 2010/13327 or WO 2012/069478.

The acrylamide polymers used in polymer flooding typically have a high molecular weight required to attain the desired thickening action. Typically, the molecular weight (M_{w}) is at least 10⁶ (1 million) g/mol, for example in the range from 1 to 30 million g/mol. Even minor polymer degradation distinctly reduces the molecular weight in such high molecular weight polymers. This generally significantly lowers the viscosity of the polymer solution, which is extremely undesirable for use in tertiary mineral oil production (EOR).

The use of acrylamide polymers in polymer flooding places high demands on the stability of the polymers. Polymer flooding typically involves pumping aqueous polymer solutions through the underground rock formation over a period of up to several years. The temperature in these underground oil deposits covers a wide range and is characteristic of the specific deposit, and it is generally higher than the temperature at the surface of the earth. In order to assure the stability of the acrylamide polymers at elevated temperature and over a long period, it is normally necessary to add various stabilizers against the harmful influence of light, oxygen and heat. More particularly, oxygen scavengers, free-radical scavengers (for example thiourea, mercaptobenzothiazole (MBT) or sodium thiocyanate (NaSCN)), sacrificial reagents (e.g. alcohols such as 2-propanol, isopropanol), precipitants and complexing agents are used. The various stabilizers commonly used in tertiary mineral oil production are described, for example, in WO 2010/133258.

Free-radical scavengers are frequently used in combination with sacrificial reagents. In addition to the use of free-radical scavengers and sacrificial reagents, it is often additionally necessary to substantially exclude oxygen, which is achieved, for example, through the costly and inconvenient purging of the polymer solution with inert gas (such as N₂) and/or the addition of an oxygen scavenger (for example sodium bisulfite or hydrazine).

WO 2015/024865 A1 describes acrylamide polymers (P) stabilized in a composition by addition of hindered amine light stabilizer (HALS) compounds. Even though said composition can show good performance, separation of the various components of the composition during oil recovery is possible due to a chromatographic effect caused by the oil bearing formation.

Thus there is a need for new polymers for enhanced oil recovery with enhanced properties, including viscosity enhancing properties, process stability, storage stability, long-term chemical stability and advantages during preparation of the polymer.

Accordingly, an object of the present invention is to provide oil recovery processes and polymers having said properties.

The object is achieved by a process for producing mineral oil from underground mineral oil deposits, in which an aqueous formulation comprising water and at least one thickening, water-soluble copolymer (P) is injected into a mineral oil deposit through at least one injection well and crude oil is withdrawn from the deposit through at least one production well, said water-soluble copolymer (P) comprising monomer units resulting from at least the following monomers:
(A) 40 to 80 % by weight of at least one uncharged, monoethylenically unsaturated, hydrophilic monomer (A) selected from the group consisting of acrylamide, methacrylamide, N-methylacrylamide, N-methylmethacrylamide, N,N'-dimethylacrylamide, N,N'-dimethylmethacrylamide, N-methylolacrylamide, N-methylolmethacrylamide and N-vinylpyrolidone;
(B) 10 to 55 % by weight of at least one ionic, monoethylenically unsaturated, hydrophilic monomer;
(C) 0 to 5% by weight of at least one monoethylenically unsaturated macromonomer (C) at least comprising - as well as the monoethylenically unsaturated group - a hydrophilic group and a hydrophobic group, wherein the at least one macromonomer (C) is represented by the general formula (I)

   H₂C=C(R¹)-R²-O-(-CH₂-CH₂-O-)ₖ-(-CH₂-CH(R³)-O-)ₗ-(-CH₂-CH₂-O-)ₘ-R⁴ (I),

   where the (-CH₂-CH₂-O-)ₖ and (-CH₂-CH(R³)-O-)ₗ and optionally -(-CH₂-CH₂-O-)ₘ units are arranged in block structure in the sequence shown in formula (I);
   where the radicals and indices are each defined as follows:
   k: is a number from 10 to 150;
   l: is a number from 5 to 25;
   m: is a number from 0 to 15;
   R¹: is H or methyl;
   R²: is independently a single bond or a divalent linking group selected from the group consisting of -(CₙH₂ₙ)- and -O-(C_{n'}H_{2n'})-, where n is a natural number from 1 to 6 and n' is a natural number from 2 to 6;
   R³: is independently a hydrocarbyl radical having at least 2 carbon atoms or an ether group of the general formula -CH₂-O-R^{3'} where R^{3'} is a hydrocarbyl radical having at least 2 carbon atoms;
   R⁴: is independently H or a hydrocarbyl radical having 1 to 4 carbon atoms;
(D) 0.01 to 2 % by weight of at least one stabilizer monomer (D) represented by the general formula (II) 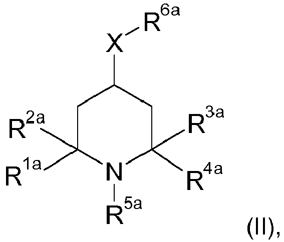 wherein
   R^{1a}, R^{2a}, R^{3a} and R^{4a} are each independently selected from C₁₋₃-alkyl;
   or the R^{1a} and R^{2a} radicals together with the carbon atom to which they are attached or the R^{3a} and R^{4a} radicals together with carbon atom to which they are attached form a ring which comprises 5 to 7 carbon atoms;
   R^{5a} is H; C₁₋₅-alkyl; or -C(=O)-C₁₋₈-alkyl;
   X is O, S, NH, or N-C₁₋₄ alkyl;
   R^{6a} is (CH₂-CH(R^{6b})-O)ₗ₁-(CH₂CH(R^{6b})-S)ₗ₂-CH=CH₂;
   each R^{6b} is independently H, methyl, ethyl or propyl;
   l1 is a number from 0 to 50;
   l2 is 0 or 1;
   where the stated amounts of the monomers are each based on the total amount of all the monomers in the copolymer (P), and wherein
   - the concentration of the water-soluble copolymer (P) in the aqueous formulation is from 0.2 % by wt. to 2 % by wt.,
   - the weight average molecular weight is from 1 Mio g/mol to 20 Mio g/mol, and
   - the temperature of the underground mineral oil deposit is from 30°C to 120°C, preferably 40 to 100°C, more preferably 50°C to 90°C.

The object is also achieved by a water-soluble copolymer (P) according to the present invention as well as the use of the copolymer (P) in enhanced oil recovery.

Another aspect of the present invention is an aqueous formulation comprising water, preferably saline water, more preferably sea water, and at least one thickening, water-soluble copolymer (P) according to the present invention, wherein the amount of the copolymer in the aqueous formulation is 0.02 to 2% by weight based on the total weight of the formulation.

It has been found that the polymer (P) of the present invention shows good viscosity and Millipore filtration ratio (MPFR), which are comparable to non-functionalized polymers. In case l1 is other than 0, i.e. alkyloxylated derivatives of (P), these polymers show increased solubility and a better ecotox profile can be achieved, making them more suitable regarding the authorization requirements (e.g. REACH registration). Vinylether derivatives of the present invention are less reactive than would be the homologue (meth)acrylate or (meth)acrylamide derivatives. However the vinylether derivatives present much better storage stabilities, thus, enabling a longer storage before making the polymer (P). Once co-polymerized, the stabilizing HALS moiety of the monomer is attached by a covalent ether bound, resulting in an increased hydrolytical stability compared to ester or amide bonds obtained for the (meth)acrylate or (meth)acrylamide derivatives. Co-polymers (P) with covalently bound stabilizing units would prevent the chromatographic effect separating the various components of the composition. Using HALS stabilizing comonomers as synthesis route to the new polymers is not the trivial option since HALS derivatives are likely to inhibit the radical copolymerization.

In the context of the present invention, radicals are defined as follows:
"Hydrocarbyl radical" denotes a univalent carbon-hydrogen residue, which can be cyclic or acyclic, branched or unbranched, saturated or unsaturated, aromatic or non-aromatic.

"Alkyl" denotes a univalent fully saturated, acyclic, branched or unbranched, hydrocarbyl residue. "C₁₋₃ alkyl" denotes an alkyl residue with one, two or three carbon atoms, i.e. methyl, ethyl, n-propyl or isopropyl. "C₁₋₄ alkyl" denotes an alkyl residue with one, two, three or four carbon atoms, e.g. methyl, ethyl, n-propyl, isopropyl, C₁₋₃ alkyl, n-butyl, sec.-butyl, tert.-butyl. "C₁₋₅ alkyl" denotes an alkyl residue with one, two, three, four or five carbon atoms, e.g. methyl, ethyl, n-propyl, isopropyl, C₁₋₃ alkyl, n-butyl, sec.-butyl, tert.-butyl, C₁₋₄ alkyl, pentyl. "C₁₋₈ alkyl" denotes an alkyl residue with one to five carbon atoms, e.g. methyl, ethyl, n-propyl, isopropyl, C₁₋₃ alkyl, n-butyl, sec.-butyl, tert.-butyl, C₁₋₄ alkyl, pentyl, C₁₋₅ alkyl, hexyl, heptyl, octyl.

In case of compositions or polymers, the amounts of all components (in % by weight and/or ppm) add up to 100%.

A water-soluble copolymer (P) in the context of the present invention is a copolymer of at least the monomers (A), (B), (D), optionally (C) and optionally further monomers. Preferably the copolymer comprises (A), (B), (D) with (C) (i.e. amount of C is >0 wt.-%) and without (C) and no further monomers. Accordingly, in one embodiment the copolymer consists of (A), (B), (C), (D) + one or more further monomers. In another embodiment the copolymer consists of (A), (B), (C), (D). In another embodiment the copolymer consists of (A), (B), (D) + one or more further monomers. In another embodiment the copolymer consists of (A), (B) and (D), which is preferred.

In the context of the present invention, a polymer comprising or containing a monomer is understood to mean a polymer comprising or containing a monomer unit (polymerized within the polymer chain) based on said monomer. The person skilled in the art is aware that, in the context of the invention, this wording does not describe a proportion of unreacted residual monomer.

The thickening, water-soluble copolymer comprises monomer units resulting from at least one uncharged, monoethylenically unsaturated, hydrophilic monomer (A) selected from the group consisting of acrylamide, methacrylamide, N-methylacrylamide, N-methylmethacrylamide, N,N'-dimethylacrylamide, N,N'-dimethylmethacrylamide, N-methylolacrylamide, N-methylolmethacrylamide and N-vinylpyrolidone. Preferably, monomer (A) is acrylamide or methacrylamide, more preferably acrylamide. Accordingly, monomer (A) is selected from one of the above list of monomers. In case more than one monomer (A) is present in the coplymer, a mixture of two or more of said monomers is present. However preferably, only one monomer (A) is present.

Furthermore, the thickening, water-soluble copolymer comprises monomer units resulting from at least one ionic, monoethylenically unsaturated, hydrophilic monomer (B). Accordingly, monomer (B) can be anionic, cationic or both anionic and cationic. Preferably monomer (B) is anionic. In case more than one monomer (B) is present in the coplymer, a mixture of two or more of said monomers is present. However preferably, only one monomer (B) is present.

Preferably, monomer (B) is represented by anionic, monoethylenically unsaturated, hydrophilic monomers (B1) comprising at least one acidic group selected from -COOH, -SO₃H and -PO₃H₂ or salts thereof; or cationic, monoethylenically unsaturated, hydrophilic monomers (B2) comprising ammonium ions; for example ammonium derivatives of N-(ω-aminoalkyl)(meth)acryl-amides or ω-aminoalkyl (meth)acrylates, e.g. 3-trimethylammoniopropylacrylamide chloride (DI-MAPAQUAT), 2-trimethylammonioethyl methacrylate chloride (MADAME-QUAT) and quaternized dimethylaminoethyl acrylate (H₂C=CH-CO-O-CH₂CH₂N(CH₃)₃⁺ Cl), (DMA3Q).

More preferably, monomer (B) is a monoethylenically, unsaturated monomer comprising at least one -COOH group or at least one -SO₃H group or at least one -COOH and at least one -SO₃H group or a salt thereof. Even more preferably, monomer (B) is acrylic acid or a salt thereof or methacrylic acid or a salt thereof, preferably acrylic acid or a salt thereof, more preferably a salt of acrylic acid.

Furthermore, the thickening, water-soluble copolymer can comprise at least one monoethylenically unsaturated macromonomer (C) at least comprising - as well as the monoethylenically unsaturated group - a hydrophilic group and a hydrophobic group, wherein the at least one macromonomer (C) is represented by the general formula (I). Accordingly, macromonomer (C) is absent or present. In case (C) is present one or more of these monomers can be present. Due to the preparation procedure typically said monomer is present in form of a mixture.

Furthermore, the thickening, water-soluble copolymer comprises at least one stabilizer monomer (D) of the formula (II).

Typical amounts of the monomers are: (A) 60 to 80 % by weight, (B) 15 to 50 % by weight, (C) 0 % by weight or (A) 60 to 80 % by weight, (B) 15 to 50 % by weight, (C) 0.01 to 5 % by weight.

Further details of the monomers are described below.

Monomers (A) are commercially available or can be prepared by methods known in the related art. The amount of monomer (A) is 40 to 80 % by weight based on the toal amount of all the monomers in the copolymer (P), preferably 60 to 80% by weight based on the total amount of all the monomers in the copolymer, more preferably 65 to 75% by weight.

Preferably, the monomers (B) used are miscible with water in any ratio. In general, the solubility of the monomer(s) (B) in water at room temperature should be at least 50 g/l, preferably at least 150 g/l and more preferably at least 250 g/l.

The amount of the monomer(s) (B) in the copolymer is 10 to 55% by weight, based on the total amount of all the monomers in the copolymer, preferably 15 to 50% by weight, more preferably 15 to 45 % by weight, even more preferably 20 to 40% by weight, even more preferably 25 to 35% by weight, based on the total amount of all the monomers in the polymer (P).

In a preferred embodiment, the copolymer (P) comprises, at least one hydrophilic, monoethylenically unsaturated anionic monomer (B1) comprising at least one acidic group selected from the group of -COOH, -SO₃H and -PO₃H₂ or salts thereof. Preference is given to monomers comprising COOH groups and/or -SO₃H groups, particular preference to monomers comprising -SO₃H groups. It will be appreciated that the salts of the acidic monomers may also be involved. Suitable counterions comprise especially alkali metal ions such as Li⁺, Na⁺ or K⁺, and also ammonium ions such as NH₄⁺ or ammonium ions having organic radicals.

Examples of monomers comprising COOH groups include acrylic acid, methacrylic acid, crotonic acid, itaconic acid, maleic acid or fumaric acid. Preference is given to acrylic acid.

Examples of monomers (B1) comprising sulfo groups include vinylsulfonic acid, allylsulfonic acid, 2-acrylamido-2-methylpropanesulfonic acid, 2-methacrylamido-2-methylpropanesulfonic acid, 2-acrylamidobutanesulfonic acid, 3-acrylamido-3-methyl-butanesulfonic acid or 2-acrylamido-2,4,4-trimethylpentanesulfonic acid. Preference is given to vinylsulfonic acid, allylsulfonic acid or 2-acrylamido-2-methylpropanesulfonic acid and particular preference to 2-acrylamido-2-methylpropanesulfonic acid (APMS) or salts thereof.

Examples of monomers (B1) comprising phosphonic acid groups include vinylphosphonic acid, allylphosphonic acid, N-(meth)acrylamidoalkylphosphonic acids or (meth)acryloyloxyalkyl-phosphonic acids, preferably vinylphosphonic acid.

Preferably, monomer (B1) may be selected from the group consisting of acrylic acid, methacrylic acid, crotonic acid, itaconic acid, maleic acid, fumaric acid, vinylsulfonic acid, allylsulfonic acid, 2-acrylamido-2-methylpropanesulfonic acid (AMPS), 2-methacrylamido-2-methylpropanesulfonic acid, 2-acrylamidobutanesulfonic acid, 3-acrylamido-3-methylbutanesulfonic acid, 2-acrylamido-2,4,4-trimethylpentanesulfonic acid, vinylphosphonic acid, allylphosphonic acid, N-(meth)acrylamidoalkylphosphonic acids and (meth)acryloyloxyalkylphosphonic acids, more preferably from acrylic acid and/or APMS or salts thereof.

The copolymer (P) may comprise at least one monoethylenically unsaturated, cationic monomer (B2) having ammonium ions.

Suitable cationic monomers (B2) comprise especially monomers having ammonium groups, especially ammonium derivatives of N-(ω-aminoalkyl)(meth)acrylamides or ω-aminoalkyl (meth)acrylates.

More particularly, monomers (B2) having ammonium groups may be compounds of the general formulae H₂C=C(R^{8P})-CO-NR^{9P}-R^{10P}-N(R^{11P})₃⁺ M⁻ (Va) and/or H₂C=C(R^{8P})-COO-R^{10P}-N(R^{11P})₃⁺ X⁻ (Vb). In these formulae, R^{8P} is H or methyl, R^{9P} is H or a C₁- to C₄-alkyl group, preferably H or methyl and R^{10P} is a preferably linear C₁- to C₄-alkylene group, for example a 1,2-ethylene group -CH₂-CH₂- or a 1,3-propylene group -CH₂-CH₂-CH₂-.

The R^{11P} radicals are each independently C₁- to C₄-alkyl radicals, preferably methyl or a group of the general formula -R^{12P}-SO₃H where R^{12P} is a preferably linear C₁- to C₄-alkylene group or a phenyl group, with the proviso that generally not more than one of the R^{11P} substituents is a substituent having sulfo groups. More preferably, the three R^{11P} substituents are methyl groups, meaning that the monomer has an -N(CH₃)₃⁺ group. M⁻ in the above formula is a monovalent anion, for example Cl⁻. It will be appreciated that M⁻ may also be a corresponding fraction of a polyvalent anion, although this is not preferred. Examples of preferred monomers (b3) of the general formula (Va) or (Vb) comprise salts of 3-trimethylammoniopropyl(meth)acrylamides or 2-trimethylammonioethyl (meth)acrylates, for example the corresponding chlorides such as 3-trimethylammoniopropylacrylamide chloride (DIMAPAQUAT) and 2-trimethylammonioethyl methacrylate chloride (MADAME-QUAT).

In a preferred embodiment, the copolymer (P) comprises at least one (meth)acrylamide and at least one cationically modified polyacrylamide, especially DMA3Q, quaternized dimethylaminoethyl acrylate, (H₂C=CH-CO-O-CH₂CH₂N(CH₃)₃⁺ Cl), generally -N(CH₃)₂-R (R= long-chain alkyl).

In one embodiment of the invention, the copolymer (P) may be a copolymer comprising at least one cationic monomer of the structure (KI): 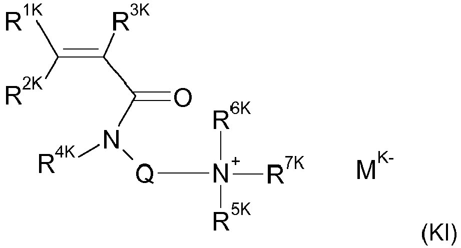 where the radicals and indices are each defined as follows:
R^{1K}, R^{2K}, R^{3K}, R^{4K}, R^{5K}, R^{6K}
   are each independently H or C₁₋₄ alkyl;
Q: is C₁₋₈-alkylene;
R^{7K}: is a C₈₋₃₀ alkyl or C₈₋₃₀-arylalkyl;
M^{K}: is a halogen selected from bromine, chlorine, iodine and fluorine or a negatively charged counterion.

More particularly, the acrylamide copolymer may comprise, as the cationic acrylic-based monomer (monomer B2), at least one monomer selected from N-acrylamidopropyl-N,N-dimethyl-N-dodecylammonium chloride (DMAPA C1(C12)), N-methacrylamidopropyl-N,N-dimethyl-N-dodecylammonium chloride (DMAPMA C1(C12)), N-acrylamidopropyl-N,N-dimethyl-N-dodecylammonium bromide (DMAPA Br(C12)), N-methacrylamidopropyl-N,N-dimethyl-N-dodecylammonium bromide (DMAPMA Br(C12)), N-acrylamidopropyl-N,N-dimethyl-N-octadecylammonium chloride (DMAPA C1(C18)), N-methacrylamidopropyl-N,N-dimethyl-N-octadecylammonium chloride (DMAPMA C1(C18)), N-acrylamidopropyl-N,N-dimethyl-N-octadecylammonium bromide (DMAPA Br(C₁₈)), N-methacrylamidopropyl-N,N-dimethyl-N-octadecylammonium bromide (DMAPMA Br(C₁₈)).

The anionic monomer may especially be acrylic acid, methacrylic acid, itaconic acid, crotonic acid, maleic acid, fumaric acid, 2-acrylamido-2-methylpropanesulfonic acid, vinylsulfonic acid, vinylphosphonic acid, allylsulfonic acid, allylphosphonic acid, styrenesulfonic acid and the water-soluble salts thereof with alkali metal, alkaline earth metal and ammonium.

As well as the above-described monomers, the copolymer (P) may comprise further monoethylenically unsaturated monomers (C). It will be appreciated that it is also possible to use mixtures of a plurality of different monomers (C).

Accordingly, in one aspect the copolymer (P) does not contain monomers (C) (0 wt-%). In another aspect the copolymer contains one or more different monomers (C) (< 0 wt-%).

The at least one monoethylenically unsaturated macromonomer (C) at least comprising - as well as the monoethylenically unsaturated group - a hydrophilic group and a hydrophobic group, wherein the at least one macromonomer (C) is represented by the general formula (I)

H₂C=C(R¹)-R²-O-(-CH₂-CH₂-O-)ₖ-(-CH₂-CH(R³)-O-)ₗ-(-CH₂-CH₂-O-)ₘ-R⁴ (I),

where the (-CH₂-CH₂-O-)ₖ and (-CH₂-CH(R³)-O-)ₗ and optionally -(-CH₂-CH₂-O-)ₘ units are arranged in block structure in the sequence shown in formula (I);
where the radicals and indices are each defined as follows:
k: is a number from 10 to 150;
l: is a number from 5 to 25;
m: is a number from 0 to 15;
R¹: is H or methyl;
R²: is independently a single bond or a divalent linking group selected from the group consisting of -(CₙH₂ₙ)- and -O-(C_{n'}H_{2n'})-, where n is a natural number from 1 to 6 and n' is a natural number from 2 to 6;
R³: is independently a hydrocarbyl radical having at least 2 carbon atoms or an ether group of the general formula -CH₂-O-R^{3'} where R^{3'} is a hydrocarbyl radical having at least 2 carbon atoms;
R⁴: is independently H or a hydrocarbyl radical having 1 to 4 carbon atoms.

The macromonomer (C) istypically a mixture and preferably a mixture of a macromonomer (C) of the formula (I) where m = 0 and a macromonomer (C) of the formula (I) where m = 1 to 15, preferably 1 to 10.

The weight ratio of the macromonomer (C) of the formula (I) where m = 0 and of the macromonomer (C) of the formula (I) where m = 1 to 15 is preferably in the range from 19 : 1 to 1 : 19, preferably in the range from 9 : 1 to 1 : 9.

These mixtures of macromonomer (C) of the formula (I) where m = 0 and macromonomer (C) of the formula (I) where m = 1 to 15 preferably give rise to a mean value (averaged over all macromonomers in the mixture) in the range of m = 0.1 to 15, preferably 0.1 to 10, more preferably 0.5 to 5, more preferably 0.5 to 3, more preferably from 0.5 to 2.5.

The R⁴ radical is H or a preferably aliphatic hydrocarbyl radical having 1 to 4 carbon atoms. R⁴ is preferably H, methyl or ethyl, more preferably H or methyl and most preferably H.

It will be apparent to the person skilled in the art in the field of polyalkyleneoxy block copolymers that the transition between the blocks, according to the method of preparation, may be abrupt or else continuous. In the case of a continuous transition, there is a transition zone comprising monomers of both blocks between the blocks. If the block boundary is fixed at the middle of the transition zone, the first block -(-CH₂-CH₂-O-)ₖ may correspondingly have small amounts of units -CH₂-CH(R³)-O- and the second block -(-CH₂-CH(R³)-O-)ₗ- small amounts of units -CH₂-CH₂-O-, though these units are not distributed randomly over the block, but arranged within the transition zone mentioned. More particularly, the optional third block (-CH₂-CH₂-O-)ₘ may have small amounts of units -(-CH₂-CH(R³)-O-)-.

Macromonomer (C) of the formula (I) where the (-CH₂-CH₂-O-)ₖ and (-CH₂-CH(R³)-O-)ₗ and optionally -(-CH₂-CH₂-O-)ₘ units are arranged in block structure in the sequence shown in formula (I). "Block structure" in the context of the present invention means that the blocks are formed from the corresponding units to an extent of at least 85 mol%, preferably to an extent of at least 90 mol%, more preferably to an extent of at least 95 mol%, based on the total amount of the respective blocks. This means that the blocks, as well as the corresponding units, may have small amounts of other units (especially other polyalkyleneoxy units). More particularly, the optional polyethyleneoxy block -(-CH₂-CH₂-O-)ₘ comprises at least 85 mol%, preferably at least 90 mol%, based on the total amount of the polyethyleneoxy block -(-CH₂-CH₂-O-)ₘ, of the unit (-CH₂-CH₂-O-). More particularly, the optional polyethyleneoxy block -(-CH₂-CH₂-O-)ₘ consists of 85 to 95 mol% of the unit (-CH₂-CH₂-O-) and of 5 to 15 mol% of the unit (-CH₂-CH(R³)-O-).

Preferably, R³ is independently a hydrocarbyl radical having 2 to 4 carbon atoms, with the proviso that the sum total of the carbon atoms in all hydrocarbyl radicals R³ is in the range from 15 to 50.

Preferably, R⁴ is H.

Preferably, at least one of the following options applies:
k is a number from 20 to 28,
l is a number from 5 to 25,
m is a number from 0 to 15.

The radicals and indices are further preferably each defined as follows:
R²: is independently a divalent linking group -O-(C_{n'}H_{2n'})- where n' is a natural number from 2 to 6;
R³: is independently a hydrocarbyl radical having 2 to 4 carbon atoms;
R⁴: is H.

The radicals and indices are especially preferably each defined as follows:
k: is a number from 20 to 28;
l: is a number from 5 to 30, preferably from 5 to 28, preferably from 5 to 25;
m: is a number from 0 to 15, preferably 0 or preferably from 0.5 to 10;
R¹: is H;
R²: is independently a divalent linking group -O-(C_{n'}H_{2n'})- where n' is a natural number from 3 to 5,
R³: is independently a hydrocarbyl radical having 2 to 4 carbon atoms, with the proviso that the sum total of the carbon atoms in all hydrocarbyl radicals R³ or R^{3'} is in the range from 15 to 60, preferably from 5 to 56, preferably from 15 to 50;
R⁴: is H.

The radicals and indices are especially preferably each defined as follows:
k: is a number from 23 to 26;
l: is a number from 5 to 30, preferably from 5 to 28, preferably from 5 to 25;
m: is a number from 0 to 15, preferably 0 or preferably from 0.5 to 10;
R¹: is H;
R²: is independently a divalent linking group -O-(C_{n'}H_{2n'})- where n' is a natural number from 3 to 5,
R³: is independently a hydrocarbyl radical having 2 to 4 carbon atoms, with the proviso that the sum total of the carbon atoms in all hydrocarbyl radicals R³ or R^{3'} is in the range from 15 to 60, preferably from 15 to 56, preferably from 15 to 50;
R⁴: is H.

The radicals and indices are especially preferably each defined as follows:
k: is a number from 23 to 26;
l: is a number from 5 to 30, preferably from 5 to 28, preferably from 5 to 25;
m: is a number from 0.1 to 10, preferably from 0.5 to 10, more preferably from 2 to 5;
R¹: is H;
R²: is independently a divalent linking group -O-(C_{n'}H_{2n'})- where n' is a natural number from 3 to 5,
R³: is independently a hydrocarbyl radical having 2 to 4 carbon atoms, with the proviso that the sum total of the carbon atoms in all hydrocarbyl radicals R³ or R^{3'} is in the range from 15 to 60, preferably from 15 to 56, preferably from 15 to 50;
R⁴: is H.

The radicals and indices are especially preferably each defined as follows:
k: is a number from 23 to 26;
l: is a number from 8.5 to 17.25;
m: is a number from 0 to 15, preferably 0 or preferably from 0.5 to 10;
R¹: is H;
R²: is independently a divalent linking group -O-(C_{n'}H_{2n'})- where n' is a natural number from 3 to 5,
R³: is independently a hydrocarbyl radical having 2 to 4 carbon atoms, with the proviso that the sum total of the carbon atoms in all hydrocarbyl radicals R³ or R^{3'} is in the range from 25.5 to 34.5;
R⁴: is H.

In a preferred embodiment, the present invention relates to an above-described process for preparing a macromonomer (C) of the formula (I), wherein the radicals and indices are each defined as follows:
k: is a number from 20 to 28;
l: is a number from 7.5 to 30, preferably from 7.5 to 28, preferably from 7.5 to 25, more preferably from 12.75 to 25, especially preferably from 13 to 23, for example 14, 16 or 22;
m: is a number from 0 to 15; preferably 0 or preferably from 0.5 to 10;
R¹: is H;
R²: is independently a divalent linking group -O-(C_{n'}H_{2n'})- where n' is a natural number from 3 to 5,
R³: is ethyl;
R⁴: is H.

In a preferred embodiment, the present invention relates to an above-described process for preparing a macromonomer (C) of the formula (I), wherein the radicals and indices are each defined as follows:
k: is a number from 23 to 26;
l: is a number from 7.5 to 30, preferably from 7.5 to 28, preferably from 7.5 to 25, more preferably from 12.75 to 25, especially preferably from 13 to 23, for example 14, 16 or 22;
m: is a number from 0 to 15; preferably 0 or preferably from 0.5 to 10;
R¹: is H;
R²: is independently a divalent linking group -O-(C_{n'}H_{2n'})- where n' is a natural number from 3 to 5,
R³: is ethyl;
R⁴: is H.

In a preferred embodiment, the present invention relates to an above-described process for preparing a macromonomer (C) of the formula (I), wherein the radicals and indices are each defined as follows:
k: is a number from 23 to 26;
l: is a number from 7.5 to 30, preferably from 7.5 to 28, preferably from 7.5 to 25, more preferably from 12.75 to 25, especially preferably from 13 to 23, for example 14, 16 or 22;
m: is a number from 0.1 to 10, preferably from 0.5 to 10, more preferably from 2 to 5;
R¹: is H;
R²: is independently a divalent linking group -O-(C_{n'}H_{2n'})- where n' is a natural number from 3 to 5,
R³: is ethyl;
R⁴: is H.

In a preferred embodiment, the present invention relates to an above-described process for preparing a macromonomer (C) of the formula (I), wherein the radicals and indices are each defined as follows:
k: is a number from 23 to 26;
l: is a number from 12.75 to 17.25, especially from 13 to 17, for example 14 or 16;
m: is a number from 0 to 15; preferably 0 or preferably from 0.5 to 10;
R¹: is H;
R²: is independently a divalent linking group -O-(C_{n'}H_{2n'})- where n' is a natural number from 3 to 5,
R³: is ethyl;
R⁴: is H.

In a further preferred embodiment, the present invention relates to an above-described process for preparing a macromonomer (C) of the formula (I), wherein the radicals and indices are each defined as follows:
k: is a number from 23 to 26;
l: is a number from 8.5 to 11.5, preferably from 9 to 11, for example 10 or 11;
m: is a number from 0 to 15, preferably from 0 to 10; preferably 0 or preferably from 0.5 to 10; R¹: is H;
R²: is independently a divalent linking group -O-(C_{n'}H_{2n'})- where n' is a natural number from 3 to 5,
R³: is n-propyl;
R⁴: is H.

The macromonomer (C) can be prepared as described in WO-A 2014/095608. The amounts are 0 to 5 % by weight based on the total amount of the monomers. Accordingly, the amount may be 0 wt.-%, i.e. monomer (C) is not present. Alternatively, the amount may be from >0 to 5 wt-%, e.g. 0,01 to 5 wt-%.

Copolymer (P) further comprises at least one monomer (D) which is a stabilizer of the formula (II): 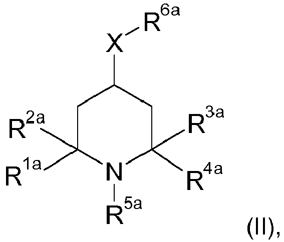 wherein
R^{1a}, R^{2a}, R^{3a} and R^{4a} are each independently selected from C₁₋₃-alkyl;
or the R^{1a} and R^{2a} radicals together with the carbon atom to which they are attached or the R^{3a} and R^{4a} radicals together with carbon atom to which they are attached form a ring which comprises 5 to 7 carbon atoms;
R^{5a} is H; C₁₋₅-alkyl; or -C(=O)-C₁₋₈-alkyl;
X is O, S, NH, or N-C₁₋₄ alkyl;
R^{6a} is (CH₂-CH(R^{6b})-O)ₗ₁-(CH₂CH(R^{6b})-S)ₗ₂-CH=CH₂;
each R^{6b} is independently H, methyl, ethyl or propyl;
l1 is a number from 0 to 50
l2 is 0 or 1, preferably 0.

Preferably, R^{1a}, R^{2a}, R^{3a}, R^{4a} are methyl.

Preferably, R^{5a} is H or C₁₋₄ alkyl, preferably C₁₋₄ alkyl. More preferably R^{5a} is methyl.

Preferably, X is oxygen.

In one embodiment l1 is 0. In another embodiment, l1 is 1 to 50, preferably 1 to 40, more preferably 1 to 30, even more preferably 1 to 25. For example l1 is 1, 5, 9, 10, 20 or 24.

Preferably, R^{6b} is H.

In a further preferred embodiment the monomer (D) is: 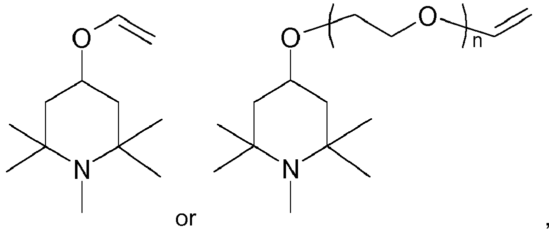 with n = 1, 5, 9, 10, 20 or 24.

In case more than one monomer (D) is present in the coplymer, a mixture of two or more of said monomers is present. However preferably, only one monomer (D) is present.

Preferably, the monomer (D) is present in an amount from 0.01 to 1 % by weight, preferably from 0.01 to 0.5 % by weight, more preferably from 0.01 to 0.1 % by weight, even more preferably from 0.01 to 0.05 % by weight.

The copolymer (P) has a weight average molecular weight is from 1 Mio g/mol to 20 Mio g/mol. Molecular weight is measured by intrinsic viscosity and then transformed into a molecular weight by the Mark-Houwink relationship (Appl. Rheol. 23, 2013, 53800).

Preferably, the copolymer (P) has an anionicity in the range from 10 to 60%, preferably from 20 to 40%, more preferably from 20 to 30%. Anionicity is understood to mean the molar proportion of the monomers comprising acidic groups based on the total amount of the copolymer P.

The copolymers (P) in accordance with the invention can be prepared by methods known in principle to the person skilled in the art, for example by solution or gel polymerization in the aqueous phase. Polymerization is effected using the monomers described above, initiator and optionally further auxiliaries in an aqueous medium. The process for preparation of the copolymers (P) can be carried out in analogy to those methods described, for example, in WO 2012/069478 and WO 2010/133527.

The above-described monomer solution preferably comprises a standard initiator for free-radical polymerization, especially selected from peroxide initiators, azo initiators and redox initiators. Typical peroxide initiators are, for example, dibenzoyl peroxide (DBPO), cyclohexylsulfonyl-acetyl peroxide (SPO), diisopropyl peroxydicarbonate (DIPP), butyl peroxypivalate, dilauryl peroxide (DLPO), tert-butyl hydroperoxide (t-BHP) and cumene hydroperoxide. Typical azo initiators are, for example, 4,4'-azobis-4-cyanovaleric acid (ACVA), 2,2'-azobis(2-methyl-propionamidine) dihydrochloride, 2,2'-azobis(2-methylpropionitrile), 2,2'-azobis(2-methylbutane-nitrile), 2,2'-azobis(2,4-dimethylvaleronitrile), 1,1'-azobis(cyanocyclohexane), 1,1'-azobis(N,N-dimethylformamide), 2,2'-azobis(2-methylbutyronitrile), 2,2'-azobis(4-methoxy-2,4-dimethylvaleronitrile), 2,2'-azobis(2,4,4-trimethylpentane). Typical redox initiators are, for example, mixtures of an oxidizing agent, such as hydrogen peroxide, peroxodisulfates or abovementioned peroxide compounds, and a reducing agent, such as iron(II) salts, silver(I) salts, cobalt(II) salts, sulfites, hydrogensulfites or thiosulfates. The monomer solution especially comprises 0.01 to 5 ppm, preferably 0.01 to 1 ppm, based on the overall monomer solution, of at least one initiator, especially selected from 4,4'-azobis(4-cyanovaleric acid) (ACVA), azobis(isobutyronitrile) (AIBN), dibenzoyl peroxide (DBPO), tert-butyl hydroperoxide (t-BHP) and redox initiators comprising at least one peroxide compound and at least one sulfite.

As solvent, the monomer solution preferably comprises water, or a mixture of water and one or more suitable water-miscible organic solvents, where the proportion of water is generally at least 50% by weight, preferably at least 80% by weight and more preferably at least 90% by weight, based on the overall solvent. Organic solvents used may be known polar, water-miscible solvents such as alcohols or dimethyl sulfoxide (DMSO). Organic solvents used may especially be water-miscible alcohols such as methanol, ethanol or propanol.

Acidic or basic monomers can be fully or partly neutralized prior to the polymerization. Preferably, the pH of the monomer solution is in the range from 4 to 9, preferably in the range from 5 to 8.

The present invention further relates an aqueous formulation (composition) comprising water, preferably saline water, more preferably sea water, and at least one thickening, water-soluble copolymer (P) according to the present invention, wherein the amount of the copolymer in the aqueous formulation is 0.02 to 2%, preferably 0.05 to 1%, more preferably 0.05 to 0.5 %, by weight based on the total weight of the formulation

More particularly, the aqueous formulation may comprise 70 to 99.98% by weight of water, preferably 90 to 99.98% by weight, especially preferably 99.5 to 99.95% by weight of water. The water may especially be tapwater, groundwater, saltwater (such as seawater), formation water or mixtures thereof. Preferably the water is saltwater (saline water), more preferably seawater.

In one embodiment of the invention, the aqueous formulation may comprise one or more further known stabilizers (light, UV and/or heat stabilizers), for example reducing agents (such as sulfite, bisulfites, metabisulfites, dithionite, hydrazine), precipitants (such as phosphates, hy-drogenphosphates, phytic acid), free-radical scavengers (such as thioureas, alkylthioureas, mercaptobenzoimidazoles (MBI), mercaptobenzothiazoles (MBT), thiocyanates, butylhydroxy-anisoles, para-methoxyphenol, quinoline), "sacrificial reagents" (primary and secondary mono-, di- and polyalcohols, such as glycerol, propylene glycol, trimethylene glycol, isopropanol, 1,2-butanediol, 1,3-butanediol, 1,4-butanediol, 2,3-butanediol, 1,2,4-butanetriol, pentaerythritol (PETA), trimethylolethane, neopentyl glycol, 1,2-pentanediol, 2,4-pentanediol, 2,3-pentanediol, trimethylolpropane, 1,5-pentanediol, partly or fully hydrolyzed polyvinyl alcohol), complexing agents (polymers such as polyacrylates, polyacetates, polycarboxylates, polyaspartates, polyphosphates, polysuccinates, or smaller anionic compounds such as ascorbic acid, citric acid, dicarboxymethylglutamic acid, ethylenediaminedisuccinic acid (EDDS), ethylenediaminetetraacetic acid (EDTA), diethylenetriaminepentamethylenephosphonic acid (DTPMP), maleic acid, nitrilotriacetic acid, oxalic acid, amino acids, succinic acid, diethylene-triaminepentaacetic acid, disodium malonate etc.) and other HALS compounds (e.g. Tinuvin 292, Sabostab UV 119, Hostavin PR 31, ADK STAB LA-52, Tinuvin 765, Cyasorb UV3529, Cyasorb UV3641, Hostavin N30, Goodrite UV3159). Customary stabilizers are described, for example, in WO 2010/133258. Especially preferably, the composition, especially the aqueous composition, comprises at least one abovementioned "sacrificial reagent". The use of secondary monoalcohols, for example isopropanol (2-propanol), is especially preferred.

Preferably, the aqueous formulation does not comprise additional stabilizers, especially stabilizers S as described in WO 2015/024865 A1. Accordingly, aqueous formulation of the present invention does not comprise one or more stabilizers S of the formula (I) 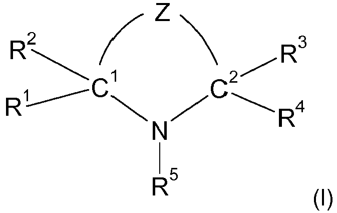 where the radicals are each defined as follows:
Z is a bivalent group comprising 2 to 5 atoms and/or groups selected from C(R⁶)₂, O, S, N-R' and C=O, where the Z group together with the carbon atoms C¹, C² and the nitrogen atom N forms a 5- to 8-membered ring, where R' is selected from H, C₁₋₂₀-alkyl, C₂₋₂₀-alkenyl, C₆₋₂₀-aryl, C₇₋₃₂-arylalkyl, C₁₋₂₀-hydroxyalkyl, C₁₋₂₀-aminoalkyl, C₁₋₂₀-cyanoalkyl, C₁₋₂₀-haloalkyl, C₁₋₂₀-sulfoalkyl and C₁₋₂₀-phosphonoalkyl;
where R⁶ is independently selected from H; OH; CN; C₁₋₂₀-alkyl; C₂₋₂₀-alkenyl; C₂₋₂₀-alkynyl; C₆₋₂₀-aryl; C₇₋₃₂-arylalkyl; C₁₋₂₀-alkoxy; C₁₋₂₀-hydroxyalkyl; C₁₋₂₀-aminoalkyl; C₁₋₂₀-cyanoalkyl; C₁₋₂₀-haloalkyl; halogen; C₁₋₂₀-sulfoalkyl; C₁₋₂₀-phosphonoalkyl; -(CH₂-CH(R^{a})-O)_{q}-H with q=1-20 and R^{a}=H or C₁₋₆-alkyl; -O-C(=O)R^{b} with R^{b}= H, C₁₋₂₀-alkyl, C₂₋₂₀-alkenyl, C₂₋₂₀-alkynyl, C₆₋₂₀-aryl or C₇₋₃₂-arylalkyl; -O-C(=O)-(CH₂)ₘ-C(=O)-O-R^{c}; -O-C(=O)-Y-C(=O)-O-R^{c}, where m=1-10, R^{c}= H, C₁₋₂₀-alkyl, C₂₋₂₀-alkenyl, C₂₋₂₀-alkynyl, C₆₋₂₀-aryl, C₇₋₃₂-arylalkyl or 1,2,2,6,6-pentamethylpiperidin-4-yl and Y is a C₂₋₁₀-alkenylene group; -O-R^{d} with R^{d} = C₂₋₂₀-alkenyl, C₂₋₂₀-alkynyl, C₆₋₂₀-aryl, C₇₋₃₂-arylalkyl or 1,2,2,6,6-pentamethylpiperidin-4-yl; -NR^{x}R^{y}, -N(R^{x})-C(=O)R^{y}; -N(R^{x})-C(=O)-Y-C(=O)-O-R^{y}; -N(R^{x})-(CH₂)ᵣ-NR^{y}R^{z} where R^{x}, R^{y} and R^{z} are each independently H, C₁₋₂₀-alkyl, C₂₋₂₀-alkenyl, C₂₋₂₀-alkynyl, C₆₋₂₀-aryl, C₇₋₃₂-arylalkyl, C₁₋₂₀-hydroxyalkyl, C₁₋₂₀-aminoalkyl or 1,2,2,6,6-pentamethylpiperidin-4-yl, r=1-10 and Y is a C₂₋₁₀-alkenylene group; -(O-CH₂-CH(R^{e})-(CH₂)ᵢ)ₚ-O-R^{e'} with p=1-20, i=0 or 1, R^{e}=H, OH or C₁₋₆-alkyl and R^{e'}=H or C₁₋₈-alkyl; -S-R^{f}; -S-S-R^{f} with R^{f}= H, C₁₋₂₀-alkyl, C₂₋₂₀-alkenyl, C₆₋₂₀-aryl or C₇₋₃₂-arylalkyl;
or where two R⁶ radicals together with the carbon atom to which they are bonded form a -C-(O-CH₂-CH₂-O)-, -C-(O-CH₂-CH₂-CH₂-O)-, -C-(O-C(CH₃)₂-C(CH₃)₂-O)- or -C-(NH-C(=O)-NH-C(=O))-ring;
R¹, R², R³ and R⁴
   are each independently selected from C₁₋₂₀-alkyl, C₂₋₂₀-alkenyl, C₆₋₂₀-aryl, C₇₋₃₂-arylalkyl, C₁₋₂₀-alkoxy, C₁₋₂₀-hydroxyalkyl, C₁₋₂₀-aminoalkyl or C₁₋₂₀-haloalkyl;
or the R¹ and R² radicals together with C¹ or the R³ and R⁴ radicals together with C² form a ring which comprises 5 to 7 carbon atoms and which may optionally be substituted by one or more R⁶ groups;
R⁵ is H; C₁₋₂₀-alkyl; C₂₋₂₀-alkenyl; C₂₋₂₀-alkynyl; C₆₋₂₀-aryl; C₇₋₃₂-arylalkyl; C₁₋₂₀-alkoxy; C₄₋₈-cycloalkoxy; C₁₋₂₀-hydroxyalkyl; C₁₋₂₀-aminoalkyl; C₁₋₂₀-cyanoalkyl; C₁₋₂₀-haloalkyl; C₁₋₂₀-sulfoalkyl; C₁₋₂₀-phosphonoalkyl; -(CH₂-CH(R^{a})-O)_{q}-H with q=1-20 and R^{a}=H or C₁₋₆-alkyl; -O-C(=O)R^{b} with R^{b}= H, C₁₋₂₀-alkyl, C₂₋₂₀-alkenyl, C₂₋₂₀-alkynyl, C₆₋₂₀-aryl or C₇₋₃₂-arylalkyl; -O-C(=O)-(CH²)ₘ-C(=O)-O-R^{c}; -O-C(=O)-Y-C(=O)-O-R^{c}, where m=1-10, R^{c}= H, C₁₋₂₀-alkyl, C₂₋₂₀-alkenyl, C₂₋₂₀-alkynyl, C₆₋₂₀-aryl, C₇₋₃₂-arylalkyl or 1,2,2,6,6-pentamethylpiperidin-4-yl and Y is a C₂₋₁₀-alkenylene group; -O-R^{d} with R^{d} = C₂₋₂₀-alkenyl, C₂₋₂₀-alkynyl, C₆₋₂₀-aryl, C₇₋₃₂-arylalkyl or 1,2,2,6,6-pentamethylpiperidin-4-yl; -(O-CH₂-CH(R^{e})-(CH₂)ᵢ)ₚ-O-R^{e'} with p=1-20, i=0 or 1, R^{e}=H, OH or C₁₋₆-alkyl and R^{e'}=H or C₁₋₈-alkyl; -C(=O)-R^{h} with R^{h}= H, C₁₋₂₀-alkyl, C₂₋₂₀-alkenyl, C₆₋₂₀-aryl or C₇₋₂₀-arylalkyl; 2,2,6,6-tetramethyl-4-piperidinol-1-yl-alkyl or 4-(2,2,6,6-tetramethyl-4-piperidinol-1-ylalkyl)benzyl.

The present invention relates to a process for mineral oil production using the stabilizer monomer (D), preferably to entirely or partly dispense with the exclusion of oxygen, meaning it is possible to achieve good self-stabilization of the copolymer solution in the presence of oxygen too. Thus, in the process according to the invention for mineral oil production, more particularly, there is no need for the process step relating to the treatment of the aqueous formulation with an inert gas (inertization) and/or it is possible to very substantially dispense with the use of oxygen scavengers in the process according to the invention. Preferably, the present invention relates to an above-described process for mineral oil production, wherein the process is performed in the presence of oxygen (or without a process step for exclusion of oxygen and/or without the addition of oxygen scavengers). One advantage of the process according to the invention for mineral oil production is thus that there is no need for a complex process step (inertization) or the use of additional additives (oxygen scavengers).

More particularly, the process for mineral oil production is a so-called polymer flooding process. Polymer flooding is typically accomplished by injecting an aqueous, viscous polymer formulation into a well which projects into a mineral oil deposit (mineral oil formation). This well is typically also called injection well and is generally lined with cement-secured steel tubes; in the region of the mineral oil formation, these tubes are perforated and thus allow the polymer formulation to leave the injection well and enter the mineral oil deposit. Typically, crude oil is withdrawn from the deposit through a further well, called the production well.

More particularly, the invention relates to a process for mineral oil production as described above, wherein the underground formation has a temperature of 30 to 120°C, more preferably 40 to 100°C, especially of 50 to 90°C. More particularly, the invention relates to a process for mineral oil production as described above, wherein the underground formation has an average porosity of 10 millidarcies to 4 darcies.

To increase the mineral oil yield, polymer flooding can advantageously be combined with other techniques for tertiary mineral oil production. In a preferred embodiment of the invention, polymer flooding using the above-described inventive compositions can be combined with a preceding surfactant flooding operation. In this case, especially prior to the polymer flooding, an aqueous surfactant formulation can first be injected into the mineral oil formation, which reduces the interfacial tension between the formation water and the mineral oil and hence increases the mobility of the mineral oil in the formation. The combination of the two techniques can often increase the mineral oil yield. Examples of suitable surfactants for surfactant flooding include surfactants having sulfate groups, sulfonate groups, polyoxyalkylene groups, anionically modified polyoxyalkylene groups, betaine groups, glucoside groups or amine oxide groups, for example alkylbenzenesulfonates, olefinsulfonates or amidopropyl betaines. It may be preferable to use anionic and/or betaine surfactants.

The person skilled in the art is aware of details of the industrial performance of "polymer flooding" and "surfactant flooding", and will employ an appropriate technique according to the type of deposit. It will be appreciated that it is also possible to use the abovementioned surfactants directly in the inventive compositions.

### Examples

### Monomers

### Example 1 HPMP-Vinylether (CAS 76245-86-8)

Vinyl ethers can be obtained following several routes known in the literature. Among those, three batches of the HPMP-vinylether derivative were obtained following three different reaction schemes followed by distillation to obtain the aimed molecule in high purity: the transetherification using Iridium complexes (Iridium Complexes in Organic Synthesis, Edition from Luis A. Oro,Carmen Claver, Wiley VCH 2009) or mercury (II) salts (Milata, V.; Rádl, S.; Voltrová, S., in Science of Synthesis, 32 (2008), p.622) or the Reppe high-pressure vinylation reaction (Milata, V.; Rádl, S.; Voltrová, S., in Science of Synthesis, 32 (2008), p.605).

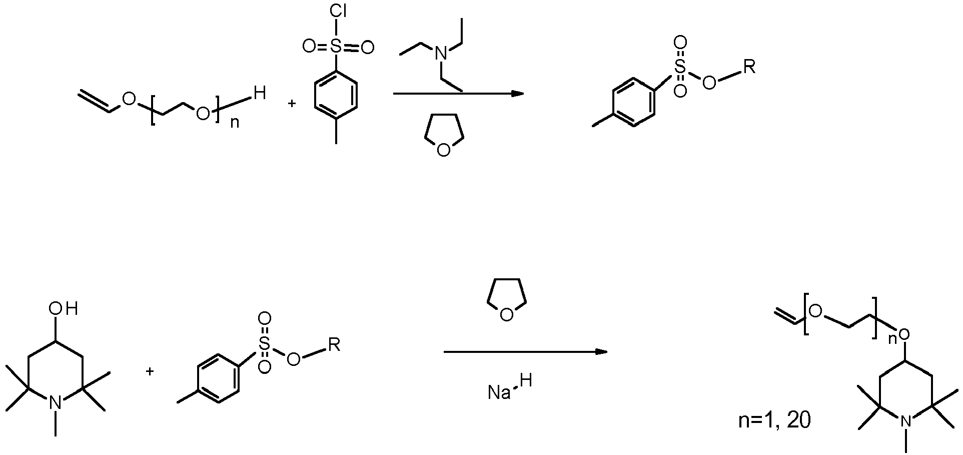

### Exemple 2 HPMP-EO-Vinylether (n=1)

89.6 g (1.01 eq.) tosyl chloride (Aldrich) dissolved in 100 ml THF was added drop wise over a period of 1 h to a solution of 41 g (1 eq.) ethylene glycol vinyl ether (Aldrich) and 70.6 g (1.5 eq.) TEA in 300 ml dry THF at room temperature. The reaction is slightly exotherm. The reaction mixture is stirred overnight. The ammonium salt was removed by filtration. The solvent and the excess of TEA are eliminated by rotavapor. The tosylate intermediate is well dried at 35°C under high vacuum for 6 h. The resulting orange oil (112g, 100% yield) was analyzed by ¹H-NMR, and the structure confirmed.

60 g (1 eq.) 6,6-pentamethyl-4-piperidinol was added in portions under inert atmosphere to a clear suspension of 14 g (1 eq.) NaH 60% in 200 ml dry THF at 0°C over a period of 1 h. The resulting suspension was further stirred at 0°C for 1 h, after reaching room temperature for an additional 3 h and finally overnight at 55°C.

93.3 g (1.1 eq.) of the tosylate intermediate was added and the reaction was heated to 60°C and stirred overnight. The resulting orange suspension was brought to room temperature and filtered. The solvent was eliminated at 35°C under high vacuum to give 49 g of an orange oil at room temperature overnight. The resulting viscous suspension was filtered and the crystalline solid was collected and washed with 20 ml of cold cyclohexane and the filtrate was concentrated in a rotavapor. 16 g of crystalline solid and 33 g of an orange oil were analyzed by TLC (1:1 cyclohexane, ethyl acetate). The solid was the 1,2,2,6,6-pentamethyl-4-piperidinol and the oil was a blend of the desired product, piperidinol and tosylate intermediate. The product was purified by chromatography (eluent 1:1 Cyclohexane, ethyl acetate) to give 4.2 g of orange oil. The structure was controlled by ¹H-NMR.

### Example 3 HPMP-E020-Vinylether (n=20)

The vinyl-ethoxylates, as starting material, were prepared by polymerization processes known to the person skilled of the art. Preferably, the polymerization takes place as base-initiated polyaddition and/or a further) base is used during the polymerization. However, the polyaddition and/or polymerization can also be carried out without using an additional base. Bases suitable for polymerization processes are known to the person skilled in the art, for example alkali metals, alkali metal hydrides, alkali metal hydroxides, alkali metal alcoholates or alkaline earth metals, alkaline earth metal hydrides, alkaline earth metal hydroxides or alkaline earth metal alcoholates, and also tertiary and heteroaromatic amines can be used for this purpose. Particularly preferred bases are KO(t-Bu) (where t-Bu is the radical tertiary-butyl), KOEt, KOH or NaOH, and mixtures thereof. The base is preferably used in amounts of from 0.05% by weight to 20% by weight, the base preferably being used in an amount of from 0.1 to 10% by weight, in particular from 0.1 to 1% by weight (in each case based on the amount of polymer (product)).

6.2 g (1.01 eq.) tosyl chloride (Aldrich) dissolved in 20 ml THF was added drop wise over a period of 1 h to a solution of 30 g (1 eq.) vinyl ether ethoxylate and 4.9 g (1.5 eq.) TEA in 150 ml dry THF at room temperature. The reaction is slightly exotherm. The reaction mixture is stirred for 1 h at room temperature and 8 h at 60°C. The reaction was cooled and kept for 48h under stirring at room temperature. The ammonium salt was removed by filtration. The solvent and the excess of TEA are eliminated by rotavapor. The tosylate intermediate is well dried at 35°C under high vacuum for 6 h. The resulting orange oil was analyzed by ¹H-NMR, and the structure confirmed.

12.06 g (2 eq.) 6,6-pentamethyl-4-piperidinol were added in portions under inert atmosphere to a clear suspension of 2.82 g (2 eq.) NaH 60% in 150 ml dry THF at 0°C over a period of 1 h. The resulting suspension was further stirred at 0°C for 1 h and after reaching room temperature, for an additional 2 h and overnight at 50°C.
38 g (1 eq.) of the tosylate intermediate was added and the reaction was heated to 60°C and stirred for 8 h. The solution was filtered and concentrated by rotavapor to give 45 g of a brown wax which was purified by column chromatography to remove the excess of piperidiol (eluent 1:1 methanol ethyl acetate plus 10% of TEA. A red wax which was well dried at 35°C under high vacuum for 6 h. The resulting 30.1 g of orange wax was analyzed by ¹H-NMR to confirm the expected structure.

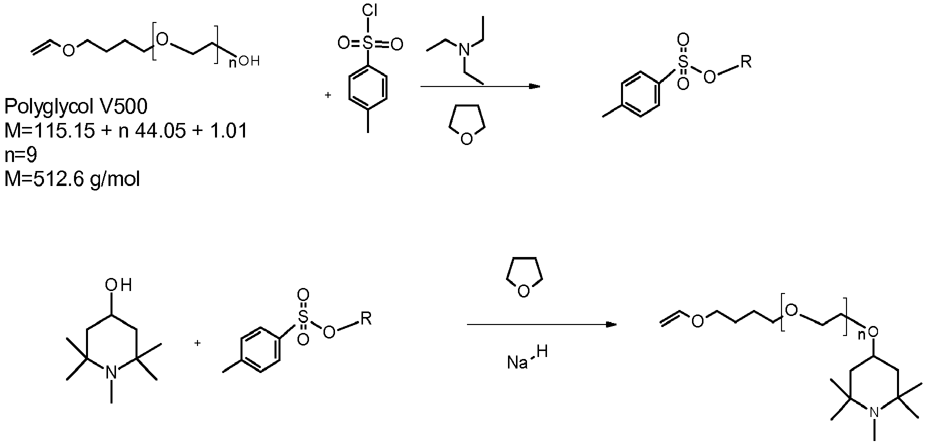

### Example 4 HPMP- ethoxylate- vinylether

15.2 g (1.01 eq.) tosyl chloride (Aldrich) dissolved in 20 ml THF was added drop wise over a period of 1 h to a solution of 40 g (1 eq.) vinyl ether ethoxylate V500 and 11.84 g (1.5 eq.) TEA in 150 ml dry THF at room temperature. The reaction is slightly exotherm. The reaction mixture is stirred for 20 h at room temperature and 8 h at 60°C. The reaction was cooled and kept for 48h under stirring at room temperature. The ammonium salt was removed by filtration. The solvent and the excess of TEA are eliminated by rotavapor. The tosylate intermediate is well dried at 35°C under high vacuum for 6 h. The resulting orange oil was analyzed by ¹H-NMR, and the structure confirmed.

12.56 g (1 eq.) 6,6-pentamethyl-4-piperidinol were added in portions under inert atmosphere to a clear suspension of 3.23 g (1.1 eq.) NaH 60% in 150 ml dry THF at 0°C over a period of 1 h. The resulting suspension was further stirred at 0°C for 1 h and after reaching room temperature, for an additional 2 h and overnight at 50°C.
48.9 g (1 eq.) of the tosylate intermediate was added and the reaction was heated to 60°C and stirred for 8 h. The solution was filtered and concentrated by rotavapor to give 46.2 g of a brown wax which was analyzed by ¹H-NMR to confirm the expected structure.

### Compounds of the formula

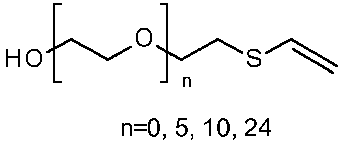

can be prepared according to WO 2015/063194 A1.

### Polymer Synthesis:

### Standard aPAM

### Composition: Sodium acrylate (NaAA) / acrylamide (AM) / functional monomer = 30 / 70-X / X mass%

Stabilized NaAA-based copolymers were synthesized according to this recipe, however, the content of functional monomer was varied from 0 up to 2.0 mass%.

### Example 1: (NaAA / AM / VE-HPMP = 30 / 69.975 / 0.025 mass%) - 400 g scale

A 1 L vessel with magnetic stirrer, pH meter and thermometer was initially charged with 112.42 g of distilled water followed by 167.94 g of a 52% by weight aqueous solution of acrylamide, 1.2 g of a 5% aqueous solution of diethylenetriamine-pentaacetic acid, and 102.86 g of a 35% aqueous solution of NaAA. Successively 4.00 g of 4,4'-azobis(4-cyanovaleric acid) (4% by weight dissolved in a 5% NaOH solution) were added, the pH adjusted to around 6.75, followed by the addition of 0.3 of the functional monomer solution of VE-HPMP (10% by weight in MeOH). The pH was finally adjusted to 6.75 using sulphuric acid and the residual amount of water was added to end up in a 30% by weight concentration of monomers (total amount of water 119.70 g minus the amount of water already added, minus the amount of acid required). The monomer solution was adjusted to the initiation temperature of 4 °C. The solution was transferred to a Dewar vessel, the temperature sensor for the temperature recording was inserted, and the flask was purged with nitrogen for 45 minutes. The polymerization was initiated with 4 g of a 4% methanolic solution of the azo initiator azobis(isobutyronitrile), 0.16 g of a 1% t-BHPO solution and 0.16 g of a 1% sodium bisulfite solution. With the onset of the polymerization, the temperature rose to 86 °C within about approximately 40 min. A solid polymer gel was obtained.

After the polymerization, the gel was incubated for 2 hours at Tmax and the gel block was comminuted with the aid of a meat grinder. The comminuted aqueous polyacrylamide gel was kept for further testing without drying.

### Associative aPAMs

### Composition: Sodium acrylate / acrylamide / associative monomer / functional monomer = 30 / 69-X / 1 / X mass%

Stabilized associative NaAA-based copolymers were synthesized according to this recipe, however, the content of functional monomer was varied from 0 up to 2.0 mass%.

### Example 2: (NaAA / AM / associative monomer / VE-HPMP = 30 / 68.975 / 1 / 0.025 mass%) - 400 g scale

A 1 L vessel with magnetic stirrer, pH meter and thermometer was initially charged with 114.96 g of distilled water followed by 163.90 g of a 52% by weight aqueous solution of acrylamide, 1.2 g of a 5% aqueous solution of diethylenetriamine-pentaacetic acid, and 101.84 g of a 35% aqueous solution of NaAA. Successively 0.4 g of defoamer Xiameter AFE-0400 (Dow) and 4.00 g of 4,4'-azobis(4-cyanovaleric acid) (4% by weight dissolved in a 5% NaOH solution) were added, and the pH adjusted to 6.75. Subsequently, 1.25 g of the associative monomer and 1.2 g of Lutensol TO129 (BASF) were added, followed by 0.3 g of a solution of the functional monomer VE-HPMP (10% by weight in MeOH). The pH was finally adjusted to 6.75 using sulphuric acid and the residual amount of water was added to end up in a 30% by weight concentration of monomers (total amount of water 122.30 g minus the amount of water already added, minus the amount of acid required). The monomer solution was adjusted to the initiation temperature of 4 °C. The solution was transferred to a Dewar vessel, the temperature sensor for the temperature recording was inserted, and the flask was purged with nitrogen for 45 minutes. The polymerization was initiated with 4 g of a 4% methanolic solution of the azo initiator azobis(isobutyronitrile), 0.16 g of a 1% t-BHPO solution and 0.16 g of a 1% sodium bisulfite solution. With the onset of the polymerization, the temperature rose to 86 °C within about approximately 40 min. A solid polymer gel was obtained.

### Performance test

**Fig. 1** shows the viscosity of the polymer of example 1 as function of the storage time.

After the polymerization, the gel was incubated for 2 hours at Tmax and the gel block was comminuted with the aid of a meat grinder. The comminuted aqueous polyacrylamide gel was kept for further testing without drying.

The polymer from example 1 was evaluated in regard of long-term chemical stability. 1000 ppm of polymer was dissolved in a brine containing 20,000 ppm NaCl and 400 ppm CaCl₂ x 2 H₂O. This solution was degassed and afterwards treated with Na₂SO₃ to remove traces of oxygen. The anaerobic polymer solution was then divided into glass test tubes, which were sealed by a flame. These test tubes were then stored at 80°C. After defined time intervals two test tubes were removed and the viscosity of the polymer solution was measured with a Brookfield LV with UL adapter at 6 rpm and compared with the initial viscosity. As shown in **Fig. 1,** the polymer according to the invention reveals a stable level of viscosity even after six months at 80°C.

## Claims

1. A process for producing mineral oil from underground mineral oil deposits, in which an aqueous formulation comprising water and at least one thickening, water-soluble copolymer (P) is injected into a mineral oil deposit through at least one injection well and crude oil is withdrawn from the deposit through at least one production well, said water-soluble copolymer (P) comprising monomer units resulting from at least the following monomers:
(A) 40 to 80 % by weight of at least one uncharged, monoethylenically unsaturated, hydrophilic monomer (A) selected from the group consisting of acrylamide, methacrylamide, N-methylacrylamide, N-methylmethacrylamide, N,N'-dimethylacrylamide, N,N'-dimethylmethacrylamide, N-methylolacrylamide, N-methylolmethacrylamide and N-vinylpyrolidone;
(B) 10 to 55 % by weight of at least one ionic, monoethylenically unsaturated, hydrophilic monomer;
(C) 0 to 5% by weight of at least one monoethylenically unsaturated macromonomer (C) at least comprising - as well as the monoethylenically unsaturated group - a hydrophilic group and a hydrophobic group,
wherein the at least one macromonomer (C) is represented by the general formula (I)
H₂C=C(R¹)-R²-O-(-CH₂-CH₂-O-)ₖ-(-CH₂-CH(R³)-O-)ₗ-(-CH₂-CH₂-O-)ₘ-R⁴ (I),
where the (-CH₂-CH₂-O-)ₖ and (-CH₂-CH(R³)-O-)ₗ and optionally -(-CH₂-CH₂-O-)ₘ units are arranged in block structure in the sequence shown in formula (I);
where the radicals and indices are each defined as follows:
k: is a number from 10 to 150;
l: is a number from 5 to 25;
m: is a number from 0 to 15;
R¹: is H or methyl;
R²: is independently a single bond or a divalent linking group selected from the group consisting of -(CₙH₂ₙ)- and -O-(C_{n'}H_{2n'})-, where n is a natural number from 1 to 6 and n' is a natural number from 2 to 6;
R³: is independently a hydrocarbyl radical having at least 2 carbon atoms or an ether group of the general formula -CH₂-O-R^{3'} where R^{3'} is a hydrocarbyl radical having at least 2 carbon atoms;
R⁴: is independently H or a hydrocarbyl radical having 1 to 4 carbon atoms;
(D) 0.01 to 2 % by weight of at least one stabilizer monomer (D) represented by the general formula (II) 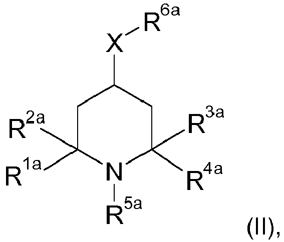 wherein
R^{1a}, R^{2a}, R^{3a} and R^{4a} are each independently selected from C₁₋₃-alkyl;
or the R^{1a} and R^{2a} radicals together with the carbon atom to which they are attached or the R^{3a} and R^{4a} radicals together with carbon atom to which they are attached form a ring which comprises 5 to 7 carbon atoms;
R^{5a} is H; C₁₋₅-alkyl; or -C(=O)-C₁₋₈-alkyl;
X is O, S, NH, or N-C₁₋₄ alkyl;
R^{6a} is (CH₂-CH(R^{6b})-O)ₗ₁-(CH₂CH(R^{6b})-S)ₗ₂-CH=CH₂;
each R^{6b} is independently H, methyl, ethyl or propyl;
l1 is a number from 0 to 50;
l2 is 0 or 1;
where the stated amounts of the monomers are each based on the total amount of all the monomers in the copolymer (P),
and wherein
• the concentration of the water-soluble copolymer (P) in the aqueous formulation is from 0.2 % by wt. to 2 % by wt.,
• the weight average molecular weight is from 1 Mio g/mol to 20 Mio g/mol, and
• the temperature of the underground mineral oil deposit is from 30°C to 120°C, preferably 40 to 100°C, more preferably 50°C to 90°C.

2. The process of claim 1, wherein monomer (D) is present in an amount from 0.01 to 1 % by weight, preferably from 0.01 to 0.5 % by weight, more preferably from 0.01 to 0.1 % by weight, even more preferably from 0.01 to 0.05 % by weight.

3. The process of claims 1 or 2, wherein monomer (A) is acrylamide or methacrylamide, preferably acrylamide.

4. The process of any one of claims 1 to 3, wherein monomer (B) is a monoethylenically, unsaturated monomer comprising at least one -COOH group or at least one -SO₃H group or at least one -COOH and at least one -SO₃H group or a salt thereof.

5. The process of any one of claims 1 to 4, wherein monomer (B) is acrylic acid or a salt thereof or methacrylic acid or a salt thereof, preferably acrylic acid or a salt thereof, more preferably a salt of acrylic acid.

6. The process of any one of claims 1 to 5, wherein R³ is independently a hydrocarbyl radical having 2 to 4 carbon atoms, with the proviso that the sum total of the carbon atoms in all hydrocarbyl radicals R³ is in the range from 15 to 50.

7. The process of any one of claims 1 to 6, wherein R⁴ is H.

8. The process of any one of claims 1 to 7, wherein at least one of the following options applies:
k is a number from 20 to 28,
l is a number from 5 to 25,
m is a number from 0 to 15.

9. The process of any one of claims 1 to 8, wherein R^{1a}, R^{2a}, R^{3a}, R^{4a} are methyl.

10. The process of any of claims 1 to 9, wherein R^{5a} is H or C₁₋₄ alkyl, preferably methyl.

11. The process of any one of claims 1 to 10, wherein X is oxygen.

12. The process of any one of claims 1 to 11, wherein the amounts of the monomers are (A) 60 to 80 % by weight, (B) 15 to 50 % by weight, (C) 0 % by weight.

13. The process of any one of claims 1 to 12, wherein the amounts of the monomers are (A) 60 to 80 % by weight, (B) 15 to 50 % by weight, (C) 0.01 to 5 % by weight.

14. A water-soluble copolymer (P) as defined in any one of claims 1 to 13.

15. An aqueous formulation comprising water, preferably saline water, more preferably sea water, and at least one thickening, water-soluble copolymer (P) according to claim 14, wherein the amount of the copolymer in the aqueous formulation is 0.02 to 2% by weight based on the total weight of the formulation.

16. Use of a copolymer (P) of claim 14 in enhanced oil recovery.
